# EUROPEAN PATENT SPECIFICATION

(11) **EP 4 449 713 B1**
(45) Date of publication and mention of the grant of the patent: **19.08.2026**
(21) Application number: 22835799.2
(22) Date of filing: 15.12.2022
(51) Int. Cl.: H04N 17/00, G01N 21/01, G02B 21/36, H04N 23/68, H04N 23/67

(54) **SYSTEMS AND METHODS OF COMPENSATING FOR BACKLASH IN AN IMAGING SYSTEM**
SYSTEME UND VERFAHREN ZUM SPIELAUSGLEICH IN EINEM ABBILDUNGSSYSTEM
SYSTÈMES ET PROCÉDÉS DE COMPENSATION DE JEU DANS UN SYSTÈME D'IMAGERIE

(30) Priority: 16.12.2021 EP 21215207
(43) Date of publication of application: 23.10.2024
(73) Proprietor: Enaiblers AB, 751 83 Uppsala (SE)
(72) Inventor: WARD, Peter Kenneth, 753 23 Uppsala (SE); TYNONG, August Erik Olof, 753 23 Uppsala (SE)
(74) Representative: Brann AB
(86) International application number: PCT/EP2022/086193
(87) International publication number: WO 2023/111200

(56) References cited:
- EP-A1- 3 572 860
- US-A1- 2008 272 273
- US-A1- 2013 271 594
- US-A1- 2018 027 173
- US-A1- 2018 364 469
- US-A1- 2020 092 468

## Description

The invention relates to imaging systems and methods of calibrating an imaging system by including calculating a first backlash value. The invention also relates to a non-transitory computer readable medium.

It is often desirable to use low cost, low precision machined components in imaging systems over higher precision more expensive components. However, low cost imaging systems suffer from mechanical backlash. Mechanical backlash is the unwanted additional mechanical play in a system which means that movement of imaging means is not precise.

Prior low costs imaging systems did not adequately compensate for this backlash, which resulted in the collection of lower quality images and imprecision about precisely which part of a sample an image is collected from. This may result in double counting fields of view, or missing fields of view entirely.

US 2016/370565 A1 relates to techniques for acquiring focused images of a microscope slide. During a calibration phase, a "base" focal plane is determined using non-synthetic and/or synthetic auto-focus techniques. Furthermore, offset planes are determined for color channels (or filter bands) and used to generate an auto-focus model. During subsequent scans, the auto-focus model can be used to estimate the focal plane of interest for each color channel (or filter band) rather than re-employing the non-synthetic and/or synthetic auto-focus techniques.

US 10269141 B1 relates to multistage camera calibration. A method includes positioning a calibration target relative to a camera. The method also includes capturing a focused image of the calibration target. Further, the method includes determining one or more approximate locations of calibration points of the calibration target within the focused image of the calibration target. In addition, the method includes adjusting the focal length of the camera. Still further, the method includes capturing an unfocused image of the calibration target. Additionally, the method includes determining, based on the one or more approximate locations of calibration points of the calibration target within the focused image of the calibration target, one or more refined locations of calibration points of the calibration target within the unfocused image of the calibration target.

US 2018/027173 A1 in accordance with its abstract states the disclosure relates to methods and systems for automatically focusing multiple images of one or more objects on a substrate. The methods include obtaining, by a processor, a representative focal distance for a first location on the substrate based on a set of focal distances at known locations on the substrate. The methods also include acquiring, by an image acquisition device, a set of at least two images of the first location. The images are each acquired using a different focal distance at an offset from the representative focal distance. The methods further include estimating, by a processor, an ideal focal distance corresponding to the first location based on comparing a quality of focus for each of the images, and storing the estimated ideal focal distance and the first location in the set of focal distances at known locations.

US 2008/272273 A1 in accordance with its abstract states a method of capturing a focused image of a continuously moving slide/objective arrangement is provided. A frame grabber device is triggered to capture an image of the slide through an objective at a first focus level as the slide continuously moves laterally relative to the objective. Alternatingly with triggering the frame grabber device, the objective is triggered to move to a second focus level after capture of the image of the slide. The objective moves in discrete steps, oscillating between minimum and maximum focus levels. The frame grabber device is triggered at a frequency as the slide continuously moves laterally relative to the objective so multiple images at different focus levels overlap, whereby a slide portion is common to each. The image having the maximum contrast value within overlapping images represents an optimum focus level for the slide portion, and thus the focused image. Associated apparatuses and methods are also provided.

EP 3 572 860 A1 in accordance with its abstract states a method for focusing may comprise receiving a first image stack of a first field of view, the first image stack comprising images captured with different focus from the first field of view; determining, from the first image stack, a first spatial distribution of focus depths in which different areas in the first field of view are in focus; determining a first local sample thickness and a first sample tilt in the first field of view based on the first spatial distribution of focus depths; and estimating, based on the first local sample thickness and the first sample tilt, a focus setting for capturing a second image stack from a second field of view.

US 2013/271594 A1 in accordance with its abstract states methods and apparatus are provided for computing focus information during scanning digital microscope slide data with a line scan camera. The systems and methods include a dynamically interleaved procedure that works by moving the specimen relative to the objective lens while the height of the objective lens is adjusted relative to the stage. Imagery data is acquired at a plurality of objective lens heights the image data from the objective lens height having maximum contrast is stored and combined into a composite digital image of at least a portion of the specimen.

US 2020/092468 A1 in accordance with its abstract states in part, the disclosure relates to an imaging system that includes a control system; image sensors in electrical communication with the control system, the one or more image sensors support data collection relative to a first pixel subwindow; and an optical assembly, the optical assembly oriented to receive light from the target and direct the light to the image sensor; wherein the optical assembly has an imaging focal volume within the imaging environment that spans a range of focus. The timing system is in electrical communication with the one or more image sensors, an illumination system and a translation assembly. A translation assembly may move target in imaging environment. The timing systems triggers illumination system to illuminate the target and the one or more sensors to image the target when image sensor pixel values in the first pixel subwindow align with at least a portion of the target.

US 2018/364469 A1 in accordance with its abstract states a microscope system includes an observation optical system including an objective lens, an XY stage capable of moving an XY plane in an X-axis direction and an Y-axis direction, a first change unit configured to change a slant of the XY plane with respect to an optical axis direction of the objective lens, and a second change unit configured to change a slant of a slide placed on the XY stage with respect to the XY plane. Changing the slant of the XY plane by the first change unit is performed based on a first mark arranged on the XY plane at a position observable by the observation optical system. Changing the slant of the slide with respect to the XY plane by the second change unit is performed based on a second mark arranged on the slide.

It is an object of the present invention to address the problems of the prior art when calibrating an imaging system.

In a first aspect, there is a method of calibrating an imaging system according to claim 1, the method comprising; capturing a first image of a sample using image capturing means of the imaging system; relocating the image capturing means relative to the sample a first distance in a first direction; relocating the image capturing means the first distance in a second direction, wherein the second direction is the opposite direction to the first direction; capturing a second image of the sample using the image capturing means; identifying a common feature in the first and second images; aligning the first and second images using the common feature to determine a first average pixel offset between the first and second images; calculating a first backlash value using the first average pixel offset and the first distance. Mechanical backlash (i.e. mechanical play) can occur in the plane of movement of an imaging system when the imaging means are moved relative to the sample. Determining the extent of the backlash and compensating for it ensures that the correct area of a sample is imaged, and ensures that no fields of view are missed or double counted. This is particularly important when attempting to identify objects within a sample, as it ensures an accurate count.

In some embodiments moving the image capturing means relative to the sample comprises moving the image capturing means while the sample is static. In other embodiments, moving the image capturing means relative to the sample comprises moving the sample while the image capturing means is static. In some embodiments, the first and second images are stored in the memory of a processing unit that also comprises a processor. In some embodiments, calculating the backlash value is done by the processor. In some embodiments, calculating the backlash value comprises dividing the first average pixel offset by the first distance. In other embodiments, calculating the backlash value comprises dividing the first distance by the first average pixel offset. In some embodiments, the first direction and the second direction are in a plane parallel to the surface of the sample.

The identifying step may be performed using any image recognition technique known in the art. In some embodiments, some or all of the steps may be performed by a processor. In some embodiments, aligning the first and second images may comprise a processor lining up the common feature in the images and determining the offset of each image from an origin point. In some embodiments, the first direction may be a diagonal direction with movement components in both the x-axis and the y-axis. In some embodiments, the average pixel offset may be calculated for an x-axis and for a y-axis.

In some embodiments, the method further comprises using the first backlash value to adjust subsequent movement of the image capturing means relative to the sample. In some embodiments, adjusting subsequent movement of the image capturing means relative to the sample comprises increasing or decreasing a subsequent distance that the image capturing means is moved relative to the sample based on the first backlash value. In some embodiments, the first backlash value is used to adjust subsequent movement of the image capturing means relative to the sample in the first and/or second direction. As the first backlash value represents the amount of backlash in the first direction/second direction when the image capturing means are moved a first distance, this first backlash value can be used to compensate for the backlash by adding an automatic adjustment to subsequent movement of the image capturing means relative to the sample in the first direction and/or second direction. This ensures that the position of the image capturing means relative to the sample is the desired position and ensures that fields of view are not missed, and reduces the chances of double counting in a field of view.

In some embodiments, the method further comprises capturing a third image of the sample using the image capturing means of the imaging system; relocating the image capturing means relative to the sample a third distance in a third direction, wherein the third direction is not parallel to the first direction; relocating the image capturing means the third distance in a fourth direction, wherein the fourth direction is the opposite direction to the third direction; capturing a fourth image of the sample using the image capturing means; identifying a second common feature in the third and fourth images; aligning the third and fourth images using the second common feature to determine a second average pixel offset between the third and fourth images; and calculating a second backlash value using the second average pixel offset and the third distance. The mechanical backlash may vary depending on the direction in which the image capturing means is moved relative to the sample. Therefore, calculating further backlash values for different directions may assist with compensating for backlash when the image capturing means is moved in any direction relative to the sample. In some embodiments, further backlash values may be compensated for a greater number of directions. In some embodiments, a backlash value is calculated for each direction that the image capturing means can move in relative to the sample.

In some embodiments, the method further comprises using the second backlash value to adjust subsequent movement of the image capturing means relative to the sample. In some embodiments, adjusting subsequent movement of the image capturing means relative to the sample comprises increasing or decreasing a subsequent distance that the image capturing means is moved relative to the sample based on the second backlash value. In some embodiments, the second backlash value is used to adjust subsequent movement of the image capturing means relative to the sample in the third and/or fourth direction. As the second backlash value represents the amount of backlash in the third direction/fourth direction when the image capturing means are moved a third distance, this second backlash value can be used to compensate for the backlash by adding an automatic adjustment to subsequent movement of the image capturing means relative to the sample in the third direction and/or fourth direction. This ensures that the position of the image capturing means relative to the sample is the desired position and ensures that fields of view are not missed, and reduces the chances of double counting in a field of view.

In some embodiments, the first direction is perpendicular to the third direction. Some image capturing means may only be moveable in two axes that are perpendicular to each other and so calculating two backlash values, one for each axis of movement, is sufficient to allow all backlash to be compensated for.

In some embodiments there is provided an imaging system comprising a processor configured to perform any of the method steps described herein. In other embodiments there is provided a non-transitory computer readable medium storing computer readable instructions which, when executed, cause a machine comprising a processor to perform any of the method steps described herein.

In some embodiments, the imaging system comprises: image capturing means configured to capture an image of a sample; a processor configured to: capture a first image; relocate an image capturing means of the imaging system relative to a sample a first distance in a first direction; relocate the image capturing means the first distance in a second direction, wherein the second direction is the opposite direction to the first direction; capture a second image of the sample using the image capturing means; identify a common feature in the first and second images; aligning the first and second images using the common feature to determine a first average pixel offset between the first and second images; and calculating a first backlash value using the first average pixel offset and the first distance. In some embodiments, the processor of the imaging system may be configured to perform any of the method steps described herein. In some embodiments, the first image and the second image are stored in a memory.

### Brief Description of the Drawings

The following examples shown in the accompanying drawings and described below are not according to the invention and are present for illustration purposes only, in which:
Figures 1A-1C show an exemplary image capturing means and a sample.
Figure 2 shows an exemplary image capturing means and sample with one bilinearly interpolated focal plane.
Figure 3 shows an exemplary an exemplary image capturing means and sample with two bilinearly interpolated focal planes.
Figure 4 is a flowchart of an exemplary method of calibrating an imaging system.
The invention is described with reference to the accompanying drawings in which:
   Figure 5 shows an exemplary set of images used to calculate a backlash value.
   Figure 6 shows an exemplary method of calibrating an imaging system.

### Detailed Description

Certain exemplary embodiments are now described in order to provide an overall understanding of the principles of the structure, function, manufacture, and use of the devices, systems, and methods disclosed herein. One or more examples of these embodiments are illustrated in the accompanying figures. It will be appreciated that the devices, systems, and methods specifically described herein and illustrated in the accompanying figures are non-limiting exemplary embodiments, and that the scope of the present invention is defined solely by the claims. Features illustrated or described in connection with one exemplary embodiment may be combined with features of other embodiments.

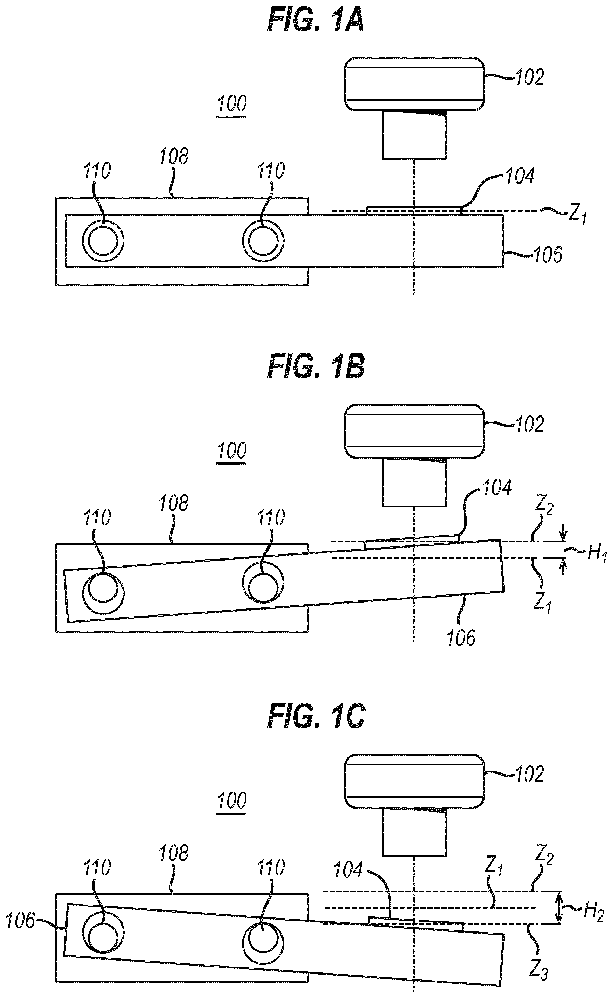

Figure 1A shows an exemplary system 100 comprising image capturing means 102 and a sample 104. The sample 104 is held on a support 106 which is mounted on rails 110 connected to stage 108. In this example the sample 104 is moved relative to the image capturing means 102. In other examples, the imaging capturing means 102 may be moved relative to the sample 104. As is shown in figure 1A the sample 104 is at a first height Z₁. Figure 1B shows the arrangement after the stage 108 and rails 110 have moved a first distance in a first direction. As the support 106 and the rails 110 are not a perfect fit, mechanical backlash (i.e. mechanical play) occurs when the stage 108 is moved. This results in the sample 104 moving to height Z₂ which is greater than Z₁ by an amount H₁. This means that the sample 104 is at a different height relative to the image capturing means 102 after the stage 108, and therefore the sample 104, has been moved. Figure 1C shows the arrangement after the stage 108, and therefore sample 104, have moved in a second direction which is opposite to the first direction. The mechanical backlash now causes the sample 104 to lower to height Z₃, below heights Z₁ and Z₂. The difference between height Z₁ and Z₃ in this example is height H₂ In this example, the image capturing means 102 captures a first set of images of the sample 104 at different focal distances after the sample 104 has been moved to the position shown in figure 1B. The sample 104 may be moved by a user or by a processor. A processor then determines a first focal distance of the most in-focus image. The sample 104 is then moved in the second direction, resulting in the sample 104 reaching the position shown in figure 1C. The image capturing means 102 then captures a second set of images of the sample 104 at different focal distances, and a processor determines a second focal distance of a most in-focus image of the second set of images.

In this example, the processor may then compare the first and second focal distances. This may result in the processor determining a difference of height H₂ between the optimal focal distance after the sample 104 has moved in the first direction compared to when the sample 104 has moved in the second direction. The processor may then adjust the focal distance of any subsequent images taken based on height H₂. For example, the difference between the first and second focal distances may be taken as a movement direction dependent calibration. For example, the first direction may be taken as the standard movement direction and set as the standard focal distance. If the processor determines that the sample 104 has been moved in the second direction, then the focal distance will be adjusted by distance H₂ to ensure that the sample 104 is still in focus. If the processor determines that the sample is then moved in the first direction, the focal distance may then be adjusted back by distance H₂ in order to ensure than an in-focus image is captured. Therefore, a calibration for the focal distance has been performed that compensates for the mechanical backlash of the system 100.

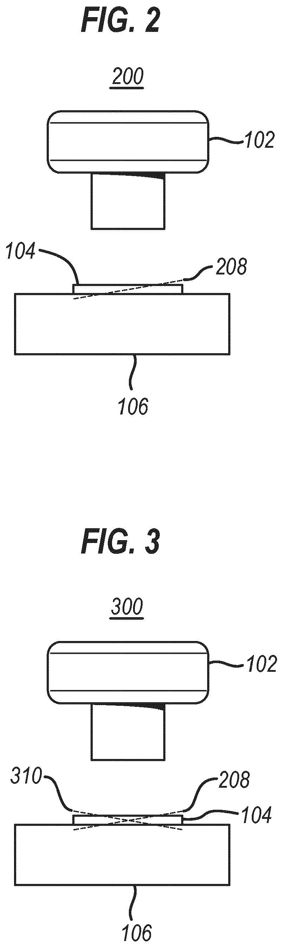

In some examples a single calibration for a focal height depending on movement direction may be insufficient. For example, in a system where the backlash causes the sample to tilt, the amount of compensation needed may vary depending on the area of the sample being viewed. Therefore, in some embodiments at least three first sets of images are captured after moving in the first direction to three different locations in the sample that are no co-linear, and a focal distance for each set of images may be determined as discussed for figure 1A to 1C. Due to the nature of the backlash these focal distances may be different, and a processor may then use linear interpolation to create a first bilinearly interpolated focal plane 208 for compensating for backlash when moving in the first direction. An exemplary first bilinearly interpolated focal plane 208 is shown in Figure 2 superimposed over system 200 which may be substantially similar to system 100. A cross section is shown, demonstrating that the first bilinearly interpolated focal plane 208 changes in height depending on which area of the sample 104 is being captured by the image capturing means 102. In this example the first bilinearly interpolated focal plane 208 maps onto the sample 104 such that each area of the sample has a focal distance value forming part of the first bilinearly interpolated focal plane. When the sample 104 is moved in the first direction such that a specific area of the sample 104 is being captured by the image capturing means, the focal distance will be adjusted to a suitable focal distance by the value for that area of the sample 104 forming part of the first bilinearly interpolated focal plane. This compensates for the backlash and ensures that an in-focus image is captured.

In this example, once the suitable focal distance has been determined, the image capturing means 102 may then capture a plurality of images at a range of focal distances spanning and including the suitable focal distance. A processor may then determine a most in-focus image of the plurality of images and save the most in-focus image to a memory. This provides a fine-tune adjustment of the focal distance once the initial calibration using the first bilinearly interpolated focal plane 208 has been performed. Unevenness in the sample for example may cause the first bilinearly interpolated focal plane 208 to not perfectly represent the optimal focal distance. By capturing images around the suitable focal distance determined by the first bilinearly interpolated focal plane 208 however, this can be further compensated for and therefore the most in-focus possible image can be determined and saved to a memory.

Figure 3 shows a system 300 with a first bilinearly interpolated focal plane 208 and a second bilinearly interpolated focal plane 310 superimposed. The second bilinearly interpolated focal plane may be determined and used in a manner substantially similar the first bilinearly interpolated focal plane except that the second bilinearly interpolated focal plane 310 relates to movement in the second direction.

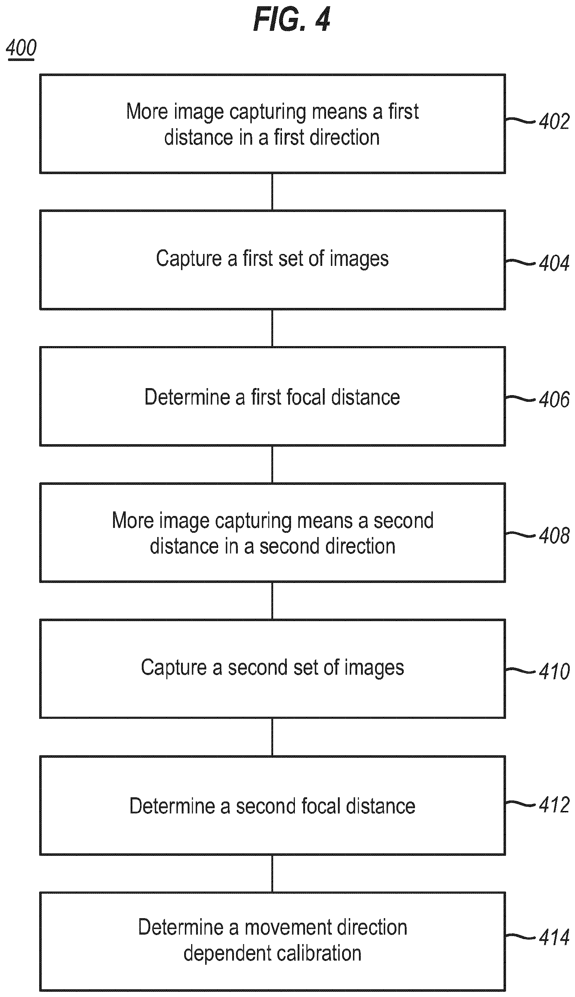

Figure 4 is an exemplary flow chart demonstrating the method 400 of determining a movement direction dependent calibration in a system 100 as described in relation to figure 1. The method comprises moving an image capturing means 102 of the imaging system 100 relative to a sample 104 a first distance in a first direction to a first position 402; capturing a first set of images of the sample 104 at different focal distances using the image capturing means 102 at the first position 404; determining a first focal distance of a most in-focus image of the first set of images 406; moving the image capturing means 102 relative to the sample 104 a second distance in a second direction to a second position, wherein the second direction is directly opposite to the first direction 408; capturing a second set of images of the sample at different focal distances using image capturing means 102 at the second position 410; determining a second focal distance of a most in-focus image of the second set of images 412; using the first focal distance and the second focal distance to determine 414 a movement direction dependent calibration for the focal distance of the image capturing means 102.

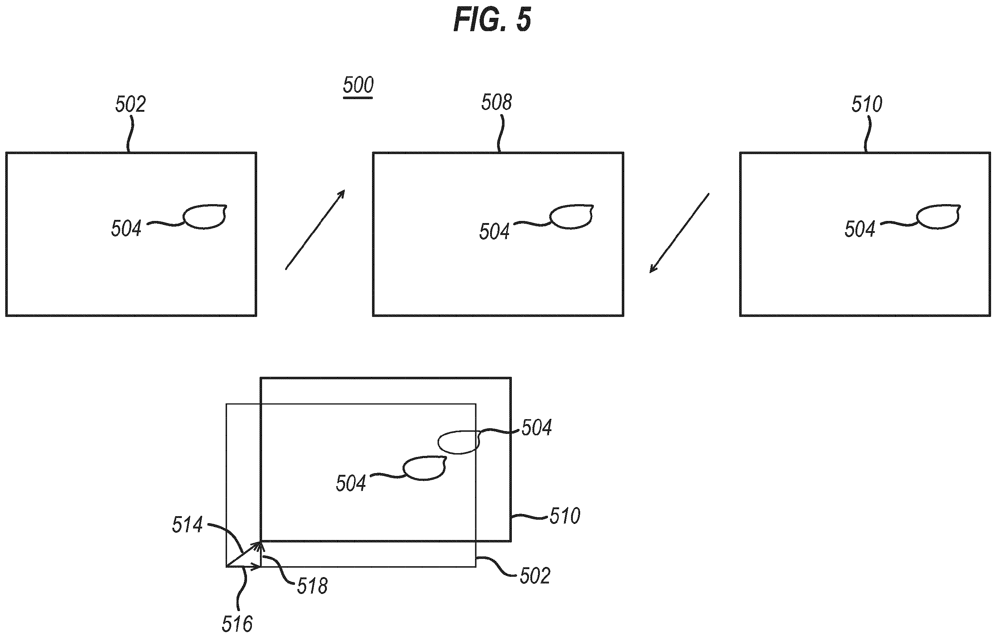

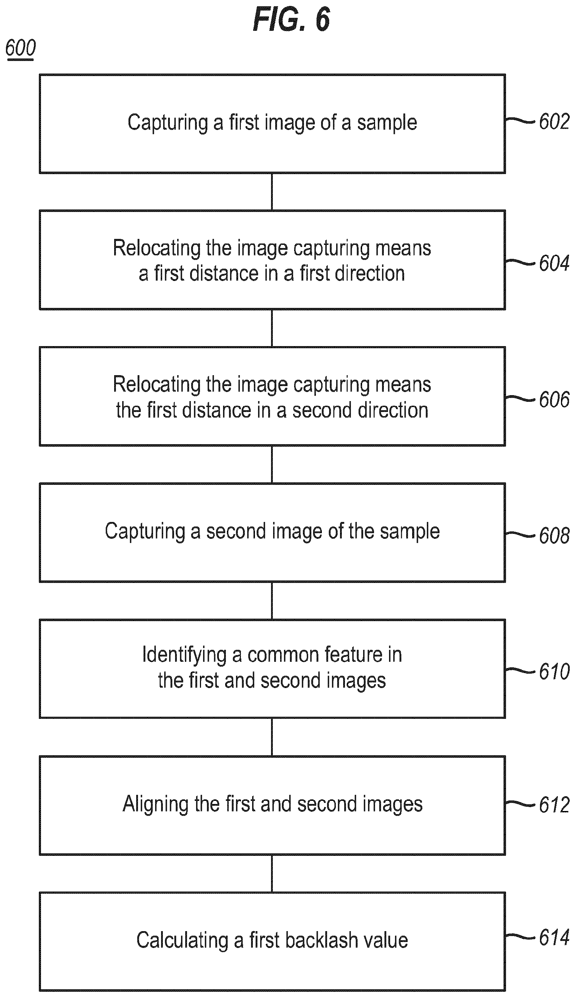

Figure 5 shows an exemplary set of images used to calculate a backlash value and figures 6 shows an exemplary method 600 of calibrating an imaging system. In a first step 602 a first image 502 of a sample 104 is captured using image capturing means 102. At step 604 the image capturing means 102 is relocated relative to the sample 104 a first distance in a first direction. In this example, the sample 104 is moved while the image capturing means 102 remains static. In other examples, the image capturing means 102 may move while the sample 104 is static, or both the image capturing means 102 and the sample 104 may move. The new field of view of the image capturing means 102 is shown in image 508. Optionally, a further image of the sample 104 may be captured at this point. Then, at step 606, the sample 104 is relocated the first distance in a second direction that is opposite to the first direction. At step 608, a second image 510 of the sample 104 is captured by the image capturing means 102. At step 610 a processor is configured to identify a common feature 504 in the first image 502 and the second image 510. This may be done using any image recognition technique known in the art. At step 612 the processor then aligns the first image 502 and the second image 510 based on the common feature 504. The processor then determines a first average pixel offset between the first image 502 and the second image 510. The processor may determine an average x-axis offset and an average y-axis offset. In some examples, the first direction may be either along the x-axis or along the y-axis. At step 614 the processor then calculates a first backlash value using the first average pixel offset and the first distance. The backlash value may be calculated by dividing the first average pixel offset by the first distance. In other examples, the backlash value may be calculated by dividing the first distance by the first average pixel offset. In embodiments where an average x-axis offset and an average y-axis offset have been calculated, then the backlash value will comprise two components. The first component may be an x-axis component equal to the average x-axis offset divided by the x-axis component of the first distance and the second component may be a y-axis component equal to the average y-axis offset divided by the y-axis component of the first distance. This backlash value can then be used to adjust subsequent movement of the image capturing means relative to the sample.

## Claims

1. A method (600) of calibrating an imaging system, the method (600) comprising;
capturing (602) a first (502) image of a sample (104) using image capturing means (102) of the imaging system;
relocating (604) the image capturing means (102) relative to the sample (104) by a first distance in a first direction;
relocating (606) the image capturing means (102) by the first distance in a second direction
and
capturing (608) a second image (510) of the sample (104) using the image capturing means (102);
**characterized in that** the second direction is the opposite direction to the first direction, and by
identifying (610) a common feature (504) in the first (502) and second images;
aligning (612) the first (502) and second (510) images using the common feature (504) to determine a first average pixel offset between the first (502) and second (510) images; and
calculating (614) a first backlash value using the first average pixel offset and the first distance.

2. The method of claim 1, further comprising using the first backlash value to adjust subsequent movement of the image capturing means (102) relative to the sample (104).

3. The method of claim 2, wherein adjusting subsequent movement of the image capturing means (102) relative to the sample (104) comprises increasing or decreasing a subsequent distance that the image capturing means (102) is moved relative to the sample based on the first backlash value.

4. The method of any of claims 1 to 3, wherein the method further comprises;
capturing a third image of the sample (104) using the image capturing means (102) of the imaging system;
relocating the image capturing means (102) relative to the sample (104) by a third distance in a third direction, wherein the third direction is not parallel to the first direction;
relocating the image capturing means (102) by the third distance in a fourth direction, wherein the fourth direction is the opposite direction to the third direction;
capturing a fourth image of the sample (104) using the image capturing means;
identifying a second common feature in the third and fourth images;
aligning the third and fourth images using the second common feature to determine a second average pixel offset between the third and fourth images; and
calculating a second backlash value using the second average pixel offset and the third distance.

5. The method of claim 4, wherein the first direction is perpendicular to the third direction.

6. The method of claim 4 or 5, wherein the method further comprises using the second backlash value to adjust subsequent movement of the image capturing means (102) relative to the sample (104).

7. The method of claim 6, wherein adjusting subsequent movement of the image capturing means (102) relative to the sample (104) comprises increasing or decreasing a subsequent distance that the image capturing means (102) is moved relative to the sample (104) based on the second backlash value.

8. An imaging system (100) comprising a processor configured to perform the method (600) of any of the preceding claims.

9. A non-transitory computer readable medium storing computer readable instructions which, when executed, cause an imaging system comprising a processor to perform the method of any of claims 1 to 7.

## Patentansprüche

1. Verfahren (600) zum Kalibrieren eines Bildgebungssystems, wobei das Verfahren (600) Folgendes umfasst:
Aufnehmen (602) eines ersten (502) Bildes einer Probe (104) unter Verwendung von Bildaufnahmemitteln (102) des Bildgebungssystems;
Versetzen (604) der Bildaufnahmemittel (102) relativ zur Probe (104) um eine erste Strecke in einer ersten Richtung;
Versetzen (606) der Bildaufnahmemittel (102) um die erste Strecke in eine zweite Richtung und
Aufnehmen (608) eines zweiten Bildes (510) der Probe (104) unter Verwendung der Bildaufnahmemittel (102);
**dadurch gekennzeichnet, dass** die zweite Richtung die entgegengesetzte Richtung zu der ersten Richtung ist, und durch
Identifizieren (610) eines gemeinsamen Merkmals (504) in dem ersten (502) und dem zweiten Bild;
Ausrichten (612) des ersten (502) und des zweiten (510) Bildes unter Verwendung des gemeinsamen Merkmals (504), um einen ersten durchschnittlichen Pixelversatz zwischen dem ersten (502) und dem zweiten (510) Bild zu bestimmen; und
Berechnen (614) eines ersten Spielwertes unter Verwendung des ersten durchschnittlichen Pixelversatzes und der ersten Strecke.

2. Verfahren nach Anspruch 1, weiter umfassend das Verwenden des ersten Spielwertes, um eine nachfolgende Bewegung der Bildaufnahmemittel (102) relativ zur Probe (104) anzupassen.

3. Verfahren nach Anspruch 2, wobei das Anpassen einer nachfolgenden Bewegung der Bildaufnahmemittel (102) relativ zur Probe (104) das Erhöhen oder Vermindern einer nachfolgenden Strecke, um welche die Bildaufnahmemittel (102) relativ zur Probe bewegt werden, auf Grundlage des ersten Spiels umfasst.

4. Verfahren nach einem der Ansprüche 1 bis 3, wobei das Verfahren weiter Folgendes umfasst:
Aufnehmen eines dritten Bildes der Probe (104) unter Verwendung der Bildaufnahmemittel (102) des Bildgebungssystems;
Versetzen der Bildaufnahmemittel (102) relativ zur Probe (104) um eine dritte Strecke in einer dritten Richtung, wobei die dritte Richtung nicht parallel zur ersten Richtung ist;
Versetzen der Bildaufnahmemittel (102) um die dritte Strecke in einer vierten Richtung, wobei die vierte Richtung die entgegengesetzte Richtung zu der dritten Richtung ist;
Aufnehmen eines vierten Bildes der Probe (104) unter Verwendung der Bildaufnahmemittel;
Identifizieren eines zweiten gemeinsamen Merkmals in dem dritten und dem vierten Bild;
Ausrichten des dritten und des vierten Bildes unter Verwendung des zweiten gemeinsamen Merkmals, um einen zweiten durchschnittlichen Pixelversatz zwischen dem dritten und vierten Bild zu bestimmen; und
Berechnen eines zweiten Spielwertes unter Verwendung des zweiten durchschnittlichen Pixelversatzes und der dritten Strecke.

5. Verfahren nach Anspruch 4, wobei die erste Richtung senkrecht zur dritten Richtung ist.

6. Verfahren nach Anspruch 4 oder 5, wobei das Verfahren weiter das Verwenden des zweiten Spielwertes, um eine nachfolgende Bewegung der Bildaufnahmemittel (102) relativ zur Probe (104) anzupassen, umfasst.

7. Verfahren nach Anspruch 6, wobei das Anpassen einer nachfolgenden Bewegung der Bildaufnahmemittel (102) relativ zur Probe (104) das Erhöhen oder Vermindern einer nachfolgenden Strecke, um welche die Bildaufnahmemittel (102) relativ zur Probe (104) bewegt werden, auf Grundlage des zweiten Spiels umfasst.

8. Bildgebungssystem (100), das einen Prozessor umfasst, der dafür konfiguriert ist, das Verfahren (600) nach einem der vorstehenden Ansprüche durchzuführen.

9. Nichtflüchtiges, computerlesbares Medium, das computerlesbare Anweisungen speichert, die, wenn sie ausgeführt werden, veranlassen, dass ein Bildgebungssystem, das einen Prozessor umfasst, das Verfahren nach einem der Ansprüche 1 bis 7 durchführt.

## Revendications

1. Procédé (600) d'étalonnage d'un système d'imagerie, le procédé (600) comprenant ;
la capture (602) d'une première image (502) d'un échantillon (104) à l'aide du moyen de capture d'images (102) du système d'imagerie ;
la relocalisation (604) du moyen de capture d'image (102) par rapport à l'échantillon (104) d'une première distance dans une première direction ;
le déplacement (606) du moyen de capture d'image (102) de la première distance dans une deuxième direction et
la capture (608) d'une deuxième image (510) de l'échantillon (104) à l'aide du moyen de capture d'image (102) ;
**caractérisée en ce que** la seconde direction est opposée à la première, et par
l'identification (610) d'une caractéristique commune (504) dans la première (502) et la deuxième image ;
l'alignement (612) des première (502) et deuxième (510) images à l'aide de la caractéristique commune (504) pour déterminer un premier décalage moyen de pixels entre la première (502) et la deuxième (510) images ; et
le calcul (614) d'une première valeur de jeu en utilisant le premier décalage moyen des pixels et la première distance.

2. Procédé selon la revendication 1, comprenant en outre l'utilisation de la première valeur de jeu pour ajuster le mouvement ultérieur du moyen de capture d'image (102) par rapport à l'échantillon (104).

3. Procédé selon la revendication 2, dans lequel l'ajustement du mouvement ultérieur du moyen de capture d'image (102) par rapport à l'échantillon (104) comprend l'augmentation ou la diminution d'une distance ultérieure à laquelle le moyen de capture d'image (102) est déplacé par rapport à l'échantillon en fonction de la première valeur de jeu.

4. Procédé selon l'une quelconque des revendications 1 à 3, dans lequel le procédé comprend en outre :
la capture d'une troisième image de l'échantillon (104) à l'aide des moyens de capture d'images (102) du système d'imagerie ;
la relocalisation des moyens de capture d'image (102) par rapport à l'échantillon (104) d'une troisième distance dans une troisième direction, dans laquelle la troisième direction n'est pas parallèle à la première direction ;
la relocalisation des moyens de capture d'image (102) de la troisième distance dans une quatrième direction, dans laquelle la quatrième direction est la direction opposée à la troisième direction ;
la capture d'une quatrième image de l'échantillon (104) à l'aide des moyens de capture d'images ;
l'identification d'une seconde caractéristique commune dans la troisième et la quatrième image ;
l'alignement des troisième et quatrième images en utilisant la seconde caractéristique commune pour déterminer un deuxième décalage moyen de pixels entre les troisième et quatrième images ; et
le calcul d'une seconde valeur de jeu en utilisant le deuxième décalage moyen des pixels et la troisième distance.

5. Procédé selon la revendication 4, dans lequel la première direction est perpendiculaire à la troisième direction.

6. Procédé selon la revendication 4 ou 5, dans lequel le procédé comprend en outre l'utilisation de la seconde valeur de jeu pour ajuster le mouvement ultérieur des moyens de capture d'image (102) par rapport à l'échantillon (104).

7. Procédé selon la revendication 6, dans lequel le réglage du mouvement ultérieur des moyens de capture d'image (102) par rapport à l'échantillon (104) comprend l'augmentation ou la diminution d'une distance ultérieure à laquelle les moyens de capture d'image (102) sont déplacés par rapport à l'échantillon (104) en fonction de la seconde valeur de jeu.

8. Système d'imagerie (100) comprenant un processeur configuré pour exécuter le procédé (600) selon l'une quelconque des revendications précédentes.

9. Support non transitoire lisible par ordinateur stockant des instructions lisibles par ordinateur qui, lorsqu'elles sont exécutées, amènent un système d'imagerie comprenant un processeur à exécuter le procédé selon l'une quelconque des revendications 1 à 7.
